# EUROPEAN PATENT APPLICATION

(11) **EP 2 806 481 A1**
(43) Date of publication of application: **26.11.2014**
(21) Application number: 14168899.4
(22) Date of filing: 19.05.2014
(51) Int. Cl.: H01M 2/10, H01M 10/42, H01M 10/653, H01M 10/6567, H01M 10/613, H01M 2/36, H01M 2/20

(54) **Wet battery package**

(30) Priority: 22.05.2013 TW 102209504
(71) Applicant: CSB Battery Co., Ltd., Taipei City 111 (TW)
(72) Inventor: Ko, Shao-Jen, 701 Tainan City (TW)
(74) Representative: Wright, Howard Hugh Burnby

(57) **Abstract**

A wet battery package includes a casing (3) defining a receiving space (30), an electrically insulating liquid (6) received in the receiving space (30), a battery unit (4) installed in the receiving space (30), and an electrical power control unit (5) installed in the receiving space (30) and electrically coupled to the batteries (42). The battery unit (4) includes a plurality of spaced-apart batteries (42) at least a portion of each of which is immersed in the electrically insulating liquid (6). The electrical power control unit (5) includes two output terminals (521) that are exposed from the casing (3) and that output electricity of the batteries (42).

## Description

The invention relates to a wet battery package, and more particularly to a wet battery package having an electrically insulating liquid that serves as a thermal conducting and safety medium.

With the advancement of electrical power storage technology, conventional lead-acid batteries are gradually replaced by lithium-ion batteries. In general, a lithium-ion battery package includes a plurality of the lithium-ion batteries that are disposed in a battery box and are connected to each other in a series or parallel manner.

Since the batteries are disposed in the battery box and generate heat during operation, the battery box is provided with a heat-dissipating mechanism, such as a cooling seat or cooling fins, so as to uniformly reduce temperature of the batteries, provide stable electricity output and prolong the service life of the battery package. According to the current design of the heat-dissipating structure of the battery box, the battery box tends to have insufficient cooling efficiency, relatively complicated structure and relatively large and heavy size, thereby resulting in a relatively high fabrication cost.

Therefore, an object of the present invention is to provide a wet battery package that can alleviate the aforesaid drawback of the prior art so as to maintain stable and safe operation of the battery package.

According to the present invention, a wet battery package includes a casing that defines a receiving space, an electrically insulating liquid that is received in the receiving space, a battery unit that is installed in the receiving space, and an electrical power control unit that is installed in the receiving space.

The battery unit includes a plurality of spaced-apart batteries, at least a portion of each of which is immersed in the electrically insulating liquid.

The electrical power control unit is electrically coupled to the batteries and includes two output terminals that are exposed from the casing and that output electricity of the batteries.

Other features and advantages of the present invention will become apparent in the following detailed description of the preferred embodiment with reference to the accompanying drawings, of which:
Figure 1 is a perspective view of the preferred embodiment of a wet battery package according to the present invention;
Figure 2 is a partly exploded perspective view of the preferred embodiment without an electrically insulating liquid;
Figure 3 is a front sectional view of the preferred embodiment without the electrically insulating liquid; and
Figure 4 is a front sectional view of the preferred embodiment illustrating a battery unit, a circuit board and a conductive wire immersed in the electrically insulating liquid.

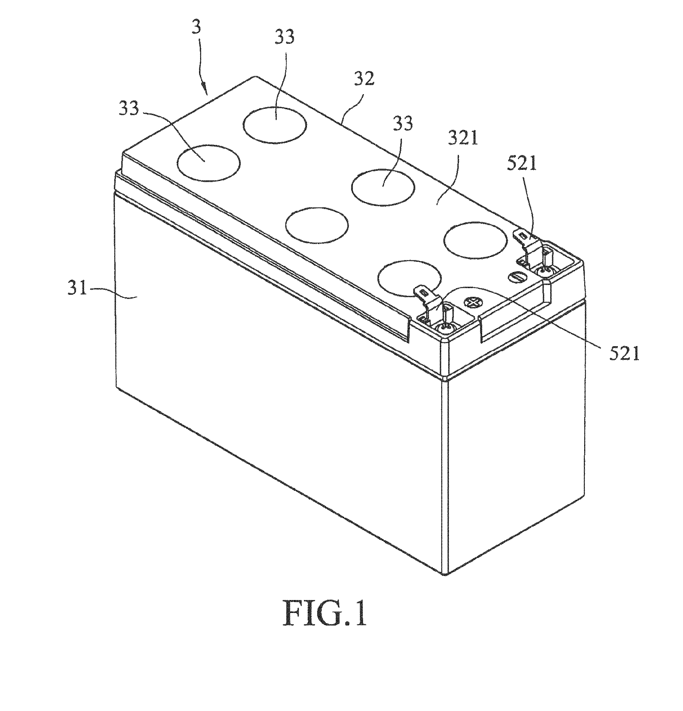

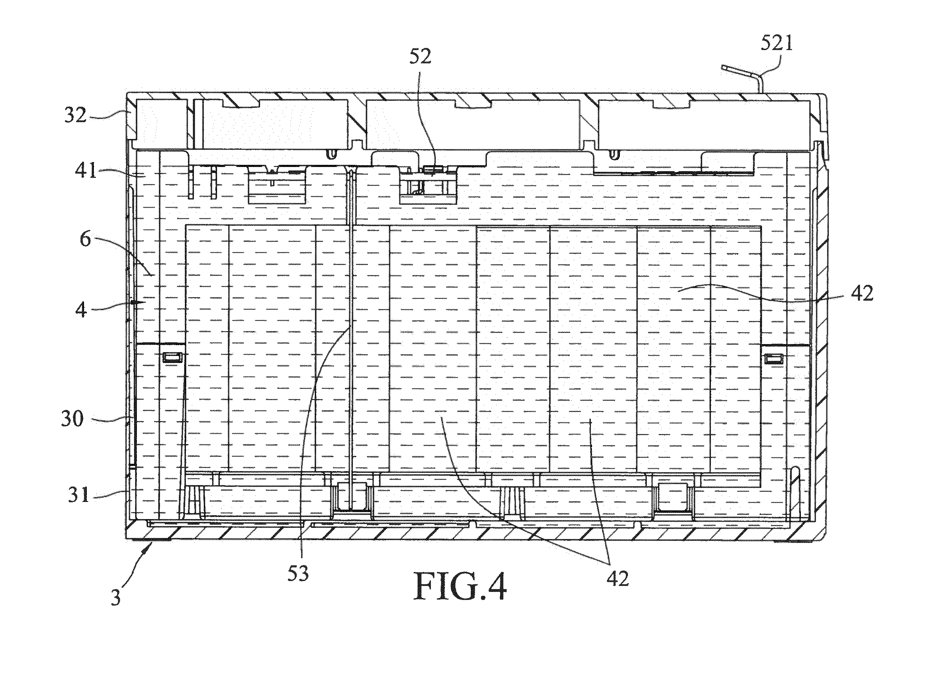

Referring to Figures 1, 2 and 4, the preferred embodiment of a wet battery package according to the present invention is suited for output of direct current to drive electrical equipment (not shown). The wet battery package includes a casing 3 that defines a receiving space 30, an electrically insulating liquid 6 that is received in the receiving space 30, a battery unit 4 that is installed in the receiving space 30 and that includes a plurality of spaced-apart batteries 42 at least a portion of each of which is immersed in the electrically insulating liquid 6, and an electrical power control unit 5 that is installed in the receiving space 30 and that is electrically coupled to the batteries 42.

The casing 3 has a casing body 31 with a top opening, a cover 32 that covers the top opening of the casing body 31 in a gastight manner and that cooperates with the casing body 31 to define the receiving space 30, and at least one sealing member 33 that is mounted on the cover 32. In this embodiment, there are six sealing members 33 separately mounted on the cover 32.

The cover 32 has an injection hole 326 that extends through top and bottom surfaces of the cover 32 and that is communicated with the receiving space 30 such that the electrically insulating liquid 6 is fillable into the receiving space 30 through the injection hole 326.

In this embodiment, the cover 32 has a cover body 321 that is disposed on the casing body 31, at least one indented portion 323 that is indented from a top of the cover body 321 and that opens upward, and a tubular inlet portion 325 that extends upwardly from a bottom of the at least one indented portion 323 and that extends through top and bottom surfaces of the cover body 321. The tubular inlet portion 325 is communicated with the receiving space 30 and the at least one indented portion 323 and defines the injection hole 326. In this embodiment, there are six indented portions 323 and six corresponding tubular inlet portions 325 separately formed in the cover body 321. Each of the sealing members 33 is disposed on the cover body 321 and covers a corresponding one of the indented portions 323 and a corresponding one of the tubular inlet portions 325. In this preferred embodiment, the six spaced-apart indented portions 323 are set in two rows. Each of the tubular inlet portions 325 extends centrally from the corresponding one of the indented portions 323 and has a top periphery that is lower than that of the corresponding one of the indented portions 323. In this arrangement, the sealing members 33 respectively and gastightly cover the injection holes 326 respectively defined by the tubular inlet portions 325.

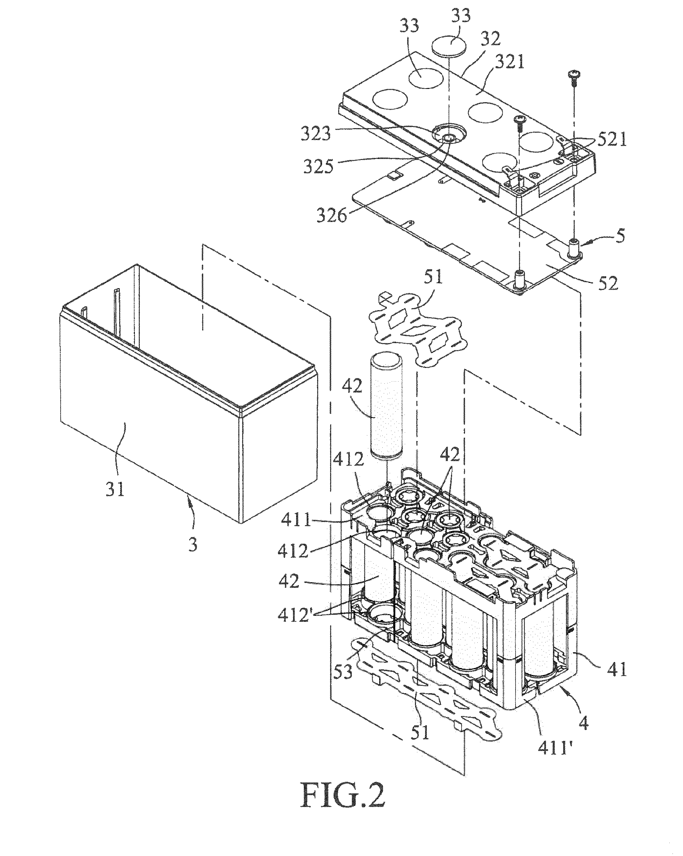

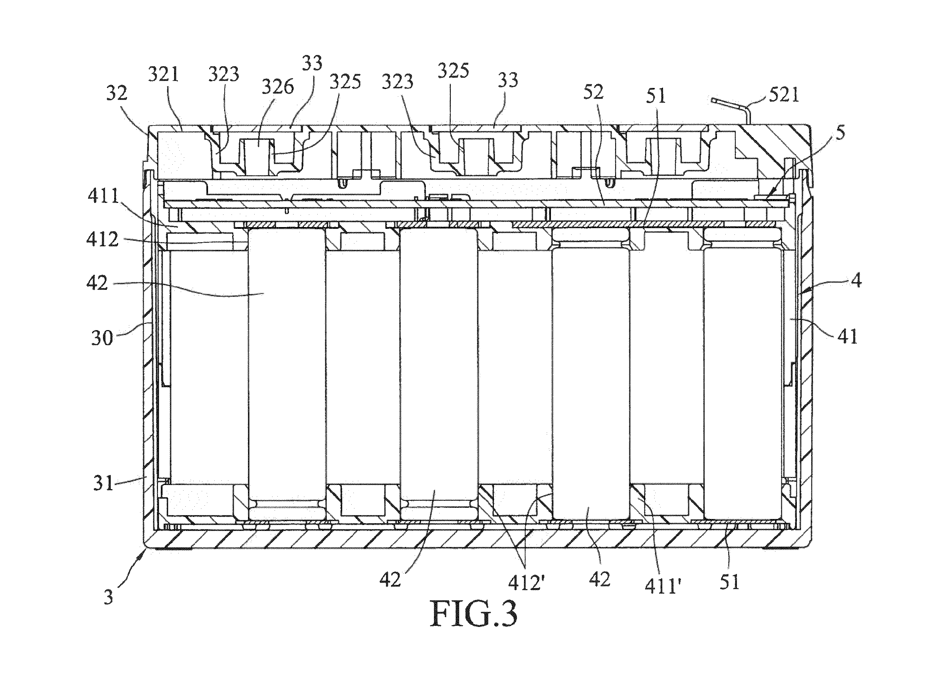

As shown in Figures 2, 3 and 4, the battery unit 4 further includes a frame mount 41 that is mounted in and communicated with the receiving space 30. The frame mount 41 has top and bottom positioning walls 411, 411' that are spaced apart from each other. Each of the top and bottom positioning walls 411, 411' has a plurality of battery-positioning holes 412, 412'. The battery-positioning holes 412 of the top positioning wall 411 are respectively aligned with the battery-positioning holes 412' of the bottom positioning wall 411'. Thebatteries 42 are respectively inserted into aligned pairs of the battery-positioning holes 412 of the top positioning wall 411 and the battery-positioning holes 412' of the bottom positioning wall 411'.

In this preferred embodiment, each of the batteries 42 is a lithium-ion battery. However, the present invention is not limited in this respect. Since the feature of the wet battery package of this invention does not reside in the configuration of the frame mount 41, which may be readily changed and adjusted by those skilled in the art, details of the same are omitted herein for the sake of brevity.

In this preferred embodiment, the electrical power control unit 5 includes two output terminals 521 that are exposed from the top of the cover body 321 of the cover 32 of the casing 3 and that output electricity of the batteries 42. Preferably, the electrical power control unit 5 further includes two conductive members 51 that are respectively disposed on the top and bottom positioning walls 411, 411' and that are respectively and electrically coupled to top and bottom ends of each of the batteries 42, and a circuit board 52 that is electrically coupled to the conductive members 51 and that controls electricity output of the batteries 42. In addition, the conductive members 51 are electrically coupled to each other through a conductive wire 53. By virtue of this arrangement, the batteries 42 are adapted to be electrically coupled to each other in a series or parallel manner. The output terminals 521 are connected to the circuit board 52, such that the circuit board 52 is able to control the electricity output of the batteries 42 and to avoid leakage of the batteries 42. Since the feature of the wet battery package of this invention does not reside in the configuration of the circuit board 52, which may be readily appreciated by those skilled in the art, details of the same are omitted herein for the sake of brevity.

In this preferred embodiment, the electrically insulating liquid 6 in the receiving space 30 has a liquid height that is greater than or equal to 30 percent of the height of the batteries 42 in the receiving space 30. In other words, the batteries 42 are immersed in the electrically insulating liquid 6 to an extent of at least 30 percent of the height thereof. Preferably, the circuit board 52 of the electrical power control unit 5 is entirely immersed in the electrically insulating liquid 6. That is to say, the batteries 42 and the circuit board 52 are all entirely immersed in the electrically insulating liquid 6. In this preferred embodiment, the electrically insulating liquid 6 entirely fills the receiving space 30.

Preferably, the electrically insulating liquid 6 may be vegetable insulating oil that includes canola oil, which has an ignition point of 371°C, or a canola oil mixture. Since the ignition point of canola oil is higher than both the ignition point of Paraffin, which is 340 °C and the ignition point of mineral insulating oil, which is 300°C, production of canola oil can reduce 90 percent of carbon dioxide emission relative to production of paraffin and mineral insulating oil and is more environmental friendly.

During assembly of the wet battery package, the battery unit 4 and the electrical power control unit 5 are disposed in the casing body 31, the cover 32 gastightly covers the casing body 31, and then the electrically insulating liquid 6 is filled into the receiving space 30 through the injection holes 326. When the liquid height of the electrically insulating liquid 6 is greater than or equal to 30 percent of the height of each of the batteries 42 in the receiving space 30, the sealing members 33 cover the tubular inlet portions 325 so as to seal the indented portions 323 in order to gastightly seal the injection holes 326.

In this preferred embodiment, since the top periphery of each of the tubular inlet portions 325 is lower than that of the corresponding one of the indented portions 323, each of the indented portions 323 can receive the electrically insulating liquid 6 that is spilled or overflowed from the corresponding one of the tubular inlet portions 325 so as to prevent the electrically insulating liquid 6 from overflowing out of the casing 3. However, in actual implementation, formation of the tubular inlet portions 325 may be omitted and the injection holes 326 are respectively formed in the indented portions 323 in communication with the receiving space 30 instead. In other embodiments, formation of the tubular inlet portions 325 and the indented portions 323 is omitted, and the injection holes 326 is formed in the cover body 321 instead. Alternatively, the cover 32 may be provided with only one injection hole 326.

According to the present invention, the electrically insulating liquid 6 can serve as an appropriate heat conductive medium. Through the electrically insulating liquid 6, heat generated during operation of the batteries 42 and the circuit board 52 can be uniformly dispersed and transmitted to the frame mount 41 and the casing 3. Since the batteries 42 and the circuit board 52 can be maintained at a certain temperature range due to uniform heat dissipation, the life cycle and performance of the batteries 42 and the circuit board 52 can be prolonged. Besides, performance, heat tolerance and high-current tolerance of a gate switch (not shown) mounted on the circuit board 52 can be improved and heat accumulation between the circuit board 52 and a bus-bar (not shown) mounted thereon can be reduced. Thus, heat exchange between the batteries 42 and environment is effectively achieved.

In addition, the electrically insulating liquid 6 can also serve as a safety medium with an endothermic effect. Since the electrically insulating liquid 6 can be attributed to rapidly absorb and disperse heat from heat accumulation among the batteries 42, a thermal runaway effect from the batteries 42 is constrained. When any one of the batteries 42 is opened and has spark emanating, the electrically insulating liquid 6 can flow into the interior of such one of the batteries 42 and extinguish flame. As a result, the utilization safety of the wet battery package is enhanced.

Moreover, the electrically insulating liquid 6 can serve as a protection medium. When the electrically insulating liquid 6 is entirely filled in the receiving space 30, the wet battery package is prevented from producing internal water vapor caused by internal thermal circulation of the wet battery package, and thus, the batteries 42 and other metal materials inside the casing 3 canbe prevented from being rusted. Furthermore, when the wet battery package is moved, the electrically insulating liquid 6 can reduce the collision and vibration of the components, such as the battery unit 4 and the electrical power control unit 5, inside the wet battery package so as to prolong the lifecycle of the wet battery package.

To sum up, by virtue of the electrically insulating liquid 6 filled in the casing 3, water vapor production during internal thermal circulation of the wet battery package can be avoided. The electrically insulating liquid 6 can also dissipate heat generated by the batteries 42 and the circuit board 52 and prevent the batteries 42 from being rusted. In addition, when the wet battery package is moved, the electrically insulating liquid 6 can reduce the collision and vibration inside the wet battery package. Thus, the wet battery package has not only relatively high quality and safety, but also a relatively simple structure to be easily fabricated.

## Claims

1. A wet battery package **characterized by**:
a casing (3) that defines a receiving space (30);
a battery unit (4) that is installed in said receiving space (30) and that includes a plurality of spaced-apart batteries (42);
an electrically insulating liquid (6) that is received in said receiving space (30) such that at least a portion of each of said batteries is immersed in said electrically insulating liquid (6); and
an electrical power control unit (5) that is installed in said receiving space (30) and is electrically coupled to said batteries (42), said electrical power control unit (5) including two output terminals (521) that are exposed from said casing (3) and that output electricity of said batteries (42).

2. The wet battery package as claimed in Claim 1, **characterized in that** said casing (3) has a casing body (31) with a top opening, a cover (32) that covers said top opening of said casing body (31) in a gastight manner and that cooperates with said casing body (31) to define said receiving space (30), and a sealing member (33) that is mounted on said cover (32), said cover (32) having an injection hole (326) that extends through top and bottom surfaces of said cover (32) and that is communicated with said receiving space (30) such that said electrically insulating liquid (6) is fillable into said receiving space (30) through said injection hole (326), said sealing member (33) gastightly covering said injection hole (326).

3. The wet battery package as claimed in Claim 1, **characterized in that** said casing (3) has a casing body (31) with a top opening, a cover (32) that covers said top opening of said casing body (31) in a gastight manner and that cooperates with said casing body (31) to define said receiving space (30), and a sealing member (33) that is mounted on said cover (32), said cover (32) having a cover body (321) that is disposed on said casing body (31), an indented portion (323) that is indented from a top of said cover body (321) and that opens upward, and a tubular inlet portion (325) that extends upwardly from a bottom of said indented portion (323) and that extends through top and bottom surfaces of said cover body (321), said tubular inlet portion (325) being communicated with said receiving space (30) and said indented portion (323), said sealing member (33) being disposed on said cover body (321) and covering said indented portion (323) and said tubular inlet portion (325).

4. The wet battery package as claimed in Claim 1, **characterized in that** said battery unit (4) further includes a frame mount (41) that is mounted in and communicated with said receiving space (30), said frame mount (41) having top and bottom positioning walls (411, 411') that are spaced apart from each other, each of said top and bottom positioning walls (411, 411') having a plurality of battery-positioning holes (412, 412'), said battery-positioning holes (412) of said top positioning wall (411) being respectively aligned with said battery-positioning holes (412') of said bottom positioning wall (411'), said batteries (42) being respectively inserted into aligned pairs of said battery-positioning holes (412) of said top positioning wall (411) and said battery-positioning holes (412') of said bottom positioning wall (411').

5. The wet battery package as claimed in Claim 4, **characterized in that** said electrical power control unit (5) further includes two conductive members (51) that are respectively disposed on said top and bottom positioning walls (411, 411') and that are respectively and electrically coupled to top and bottom ends of each of said batteries (42), and a circuit board (52) that is electrically coupled to said conductive members (51) and that controls electricity output of said batteries (42), said output terminals (521) being connected to said circuit board (52).

6. The wet battery package as claimed in Claim 2, **characterized in that** said battery unit (4) further includes a frame mount (41) that is mounted in and communicated with said receiving space (30), said frame mount (41) having top and bottom positioning walls (411, 411') that are spaced apart from each other, each of said top and bottom positioning walls (411, 411') having a plurality of battery-positioning holes (412, 412'), said battery-positioning holes (412) of said top positioning wall (411) being aligned with said battery-positioning holes (412') of said bottom positioning wall (411'), said batteries (42) being respectively inserted into aligned pairs of said battery-positioned holes (412, 412') of said top and bottom positioning walls (411, 411').

7. The wet battery package as claimed in Claim 6, **characterized in that** said electrical power control unit (5) further includes two conductive members (51) that are respectively disposed on said top and bottom positioning walls (411, 411') and that are respectively and electrically coupled to top and bottom ends of each of said batteries (42), and a circuit board (52) that is electrically coupled to said conductive members (51) and that controls electricity outputs of said batteries (42), said output terminals (521) being connected to said circuit board (52).

8. The wet battery package as claimed in Claim 3, **characterized in that** said battery unit (4) further includes a frame mount (41) that is mounted in and communicated with said receiving space (30), said frame mount (41) having two top and bottom positioning walls (411, 411') that are spaced apart from each other, each of said top and bottom positioning walls (411, 411') having a plurality of battery-positioned holes (412), said battery-positioning holes (412) of said top positioning wall (411) being aligned respectively with said battery-positioning holes (412') of said bottom positioning wall (411'), said batteries (42) being respectively inserted into aligned pairs of said battery-positioning holes (412, 412') of said top and bottom positioning walls (411, 411').

9. The wet battery package as claimed in Claim 8, **characterized in that** said electrical power control unit (5) further includes two conductive members (51) that are respectively disposed on said top and bottom positioning walls (411, 411') and that are respectively and electrically coupled to top and bottom ends of each of said batteries (42), and a circuit board (52) that is electrically coupled to said conductive members (51) and that controls electricity outputs of said batteries (42), said output terminals (521) being connected to said circuit board (52).

10. The wet battery package as claimed in Claim 1, **characterized in that** said electrically insulating liquid (6) in said receiving space (30) has a liquid height that is greater than or equal to 30 percent of a height of each of said batteries (42) in said receiving space (30).

11. The wet battery package as claimed in Claim 10, **characterized in that** said electrical power control unit (5) is immersed in said electrically insulating liquid (6).

12. The wet battery package as claimed in Claim 1, **characterized in that** said electrically insulating liquid (6) is vegetable insulating oil that includes canola oil or a canola oil mixture.
